# EUROPÄISCHE PATENTANMELDUNG

(11) **EP 1 050 694 A2**
(43) Veröffentlichungstag der Anmeldung: **08.11.2000**
(21) Anmeldenummer: 00109009.1
(22) Anmeldetag: 26.04.2000
(51) Int. Cl.: F16C 19/54

(54) **Vorrichtung zum Lagern eines Schwenkelements**

(30) Priorität: 06.05.1999 US 306176
(71) Anmelder: Heidelberger Druckmaschinen Aktiengesellschaft, 69115 Heidelberg (DE)
(72) Erfinder: Breton, Richard Edward, Rochester, NH 03857 (US); St. Ours, Joseph Adrian, Lee, NH 03824 (US)
(74) Vertreter: Kesselhut, Wolf (DE)

(57) **Zusammenfassung**

Eine Vorrichtung zum Lagern eines Schwenkelements (2), insbesondere eines Kurvenfolgerarms in einer Rollenrotationsdruckmaschine, mit einem ortsfesten Element (4) und einer an diesem befestigten Lageranordnung, in der das Schwenkelement (2) relativ gegen das ortsfeste Element (4) derart schwenkbar gelagert ist, dass das Schwenkelement (2) in Vorwärtsrichtung in eine erste Endlage und in Rückwärtsrichtung in eine zweite Endlage bewegbar ist, zeichnet sich dadurch aus, dass die Lageranordnung ein an dem Schwenkelement (2) befestigtes erstes Wälzlager und ein zwischen dem ersten Wälzlager und dem ortsfesten Element (4) angeordnetes zweites Wälzlager umfasst, von denen eines mit dem Schwenkelement (2) in Vorwärtsrichtung drehbar ist, während es in Rückwärtsrichtung an einer Drehung gehindert wird.

## Beschreibung

Die vorliegende Erfindung betrifft eine Vorrichtung zum Lagern eines Schwenkelements, insbesondere eines Kurvenabtaster-Arms in einer Rollenrotationsdruckmaschine, gemäß dem Oberbegriff von Anspruch 1.

In vielen Anwendungen in vielen Bereichen der Technik besteht die Notwendigkeit, um eine Schwenkachse hin- und herschwingende Maschinenelemente zu lagern. Wenn hohe Präzision und geringer Reibungswiderstand erforderlich sind, werden in der Regel Rollkörperlager gewählt, z. B. Kugellager, Wälzlager oder Nadellager, in die in bestimmten Zeitabständen oder gegebenenfalls kontinuierlich über die gesamte Betriebszeit der Vorrichtung ein Schmiermittel eingespritzt wird.

Produkthandhabungsvorrichtungen, wie sie z. B. in der Drucktechnik, speziell in Rotationsdruckmaschinen, eingesetzt werden, umfassen in der Regel hin- und herschwingende Maschinenelemente, z. B. in Bogenanlegern eingesetzte Greifer und Kurvenabtaster für Greiferklappen, Übergabegreifer zum Transportieren von Produkten zwischen Druckwerken sowie Pendelauslegevorrichtungen, die in der Regel bis zu mehrere hundert Mal in der Minute zwischen zwei Endlagen hin- und herschwingen. Der Auslenkungswinkel z. B. einer Greiferklappe liegt dabei nur in der Größenordnung weniger Grade, beispielsweise zwischen 8° und 25°.

Aufgrund des geringen Auslenkungswinkels werden in dem Wälzlager immer dieselben Walzen belastet und die einzelnen Rollkörper eines Lagers führen keine vollständige Umdrehung aus, wodurch das Schmiermittel in dem Lager nur in begrenztem Maße verteilt wird. Ein konstantes Schmieren und eine konstante Zirkulation des Schmiermittels sind nur schwer zu erreichen, da erstens das für Schwenkgreifer verwendete Schmiermittel nicht dasselbe ist wie die in anderen Lagern der Maschine verwendeten Schmiermittel und zweitens die Greifer häufig über eine umlaufende Kette, einen Zahnriemen etc. bewegt werden. Diese hohen Belastungen führen häufig zu einem frühen Ausfall des Lagers aufgrund unzureichender Schmierung und einer ungleichmäßigen Belastung des Lagers.

Demgemäß ist es eine Aufgabe der vorliegenden Erfindung, eine Vorrichtung zum Lagern eines Schwenkelements zu schaffen, durch die die beschriebenen Nachteile bekannter Vorrichtungen dieser Art beseitigt werden, der vorzeitige Verschleiß von Lagerungen von mit hoher Geschwindigkeit hin- und herschwingenden Elementen verhindert wird und die Lebenszeit eines derartigen Lagers verlängert wird. Insbesondere ist es eine Aufgabe der vorliegenden Erfindung, eine gleichmäßige Verteilung der Belastung auf alle Lagerelemente, eine volle Umdrehung der Rollkörper und eine gleichmäßige Verteilung des Schmiermittels im Lager zu gewährleisten.

Diese Aufgabe wird erfindungsgemäß durch die Merkmale von Anspruch 1 gelöst.

Weitere Merkmale der Erfindung ergeben sich aus den Unteransprüchen.

Eine erfindungsgemäße Vorrichtung zum Lagern eines Schwenkelements, insbesondere eines Kurvenabtaster-Arms in einer Rollenrotationsdruckmaschine, mit einem ortsfesten Element und einer an diesem befestigten Lageranordnung, in der das Schwenkelement relativ gegen das ortsfeste Element derart schwenkbar gelagert ist, dass das Schwenkelement in Vorwärtsrichtung in eine erste Endlage und in Rückwärtsrichtung in eine zweite Endlage bewegbar ist, zeichnet sich dadurch aus, dass die Lageranordnung ein an dem Schwenkelement befestigtes erstes Wälzlager und ein zwischen dem ersten Wälzlager und dem ortsfesten Element angeordnetes zweites Wälzlager umfasst, von denen eines mit dem Schwenkelement in Vorwärtsrichtung drehbar ist, während es in Rückwärtsrichtung an einer Drehung gehindert wird.

Das ortsfeste Element kann vorzugsweise als ein ortsfestes Gehäuse und das Schwenkelement vorzugsweise als eine über die Lageranordnung an das Gehäuse angelenkte Schwenkwelle ausgebildet sein.

Das erste Lager kann vorzugsweise als eine in Vorwärtsrichtung drehbare und in Rückwärtsrichtung festgestellte oder feststellende, d. h. an einer Drehung gehinderte, Klemmkörper-Freilaufkupplung, insbesondere eine Klemmrollen-Freilaufkupplung, ausgebildet sein. Die Vorwärtsrichtung ist beispielsweise durch die Aufwärtsbewegung eines Arms eines Kurvenabtasters, z. B. einer Kurvenrolle oder eines Kurvengleitschuhs, oder einer Greiferklappe definiert, kann aber selbstverständlich auch durch deren Abwärts- oder Rückbewegung definiert sein.

Zwischen dem ersten Wälzlager und dem zweiten Wälzlager kann gemäß einer weiteren Ausführungsform vorzugsweise ein Abstandhalter vorgesehen sein, an dessen Stirnseite in einer weiteren Ausführungsform der Erfindung Indexrillen gebildet sein können. In diesem Fall kann ferner vorzugsweise an dem Schwenkelement ein Indexstift vorgesehen sein, der federkraftbeaufschlagt gegen die Indexrillen der Stirnseite angestellt oder anstellbar ist.

Gemäß einer weiteren Ausführungsform der Erfindung kann vorgesehen sein, dass das erste Wälzlager mit der Achswelle zwischen der ersten und zweiten Endlage schwenkbar ist oder geschwenkt wird, während das zweite Wälzlager nur in eine der beiden Richtungen schrittweise bewegbar ist oder bewegt wird.

Gemäß einer weiteren Ausführungsform der Erfindung kann das zweite Wälzlager in Vorwärtsrichtung schrittweise bewegbar ausgebildet sein oder bewegt werden. Alternativ kann das zweite Wälzlager auch bezüglich des ortsfesten Elements nur in Rückwärtsrichtung schrittweise bewegbar ausgebildet sein oder bewegt werden.

Die Aufgaben der Erfindung werden insoweit erreicht, als die Schwingbewegung des Maschinenelements an sich (z. B. der Greiferwelle oder der Kurvenrolle) dazu eingesetzt wird, die innere Lauffläche des Lagers vorwärts zu bewegen. Dadurch zirkulieren die Rollkörper durch das Lager, so dass sie ihre relative Position im Lager kontinuierlich ändern. Auf diese Weise wird ein kontinuierliches Schmieren der Rollkörper und eine gleichmäßige Verteilung der auf das Lager wirkenden Belastung sichergestellt. Außerdem wird erreicht, dass die Rollkörper komplette Umdrehungen durchlaufen.

Durch die erfindungsgemäße Vorrichtung zum Lagern eines ein hin- und herschwingenden Maschinenelements, welche in Form eines Doppellagers ausgestaltet ist, ist gewährleistet, dass sich die Lager um den gesamten Winkelbereich von 360° drehen, während das Maschinenelement wiederholt nur um einen begrenzten Winkel hin- und herschwingt. Die Klemmkörper-Freilaufkupplung stützt die Achse des hin- und herschwingenden Maschinenelements. Bei einer Aufwärtsbewegung des Maschinenelements ist die Klemmkörper-Freilaufkupplung frei mit dem Maschinenelement und dem sie umgebenden Wälzlager drehbar. Bei der Abwärtsbewegung wird die Klemmkörper-Freilaufkupplung geschlossen und überträgt auf diese Weise ein Drehmoment auf die innere Lauffläche des äußeren Wälzlagers. Das äußere Wälzlager wird auf diese Weise bei jeder Schwingbewegung um den Winkel der Abwärtsbewegung (bzw. der Aufwärtsbewegung, je nach Feststellrichtung der Klemmkörper-Freilaufkupplung) vorwärts bewegt. Da das äußere Wälzlager auf beiden Seiten versiegelt ist und die Klemmkörper-Freilaufkupplung nicht versiegelt ist, ist der Reibungswiderstand oder der Rollwiderstand des äußeren Wälzlagers um einiges größer als der der Klemmkörper-Freilaufkupplung. Auf diese Weise wird sichergestellt, dass die innere Lauffläche des äußeren Wälzlagers sich nicht mit der Klemmkörper-Freilaufkupplung dreht, wenn das Maschinenelement um den Winkel der Abwärtsbewegung zurückbewegt wird.

In einer zweiten Ausführungsform der Erfindung wird die Indexbewegung nicht durch eine in eine Richtung festgestellte Klemmkörper-Freilaufkupplung erreicht, sondern kann durch einen gegen die Lageranordnung vorgespannten, einrastenden Indexstift, der auf dem hin- und herschwingenden Maschinenelement angeordnet ist, erreicht werden. In einem zwischen der äußeren Lauffläche des inneren Wälzlagers und der inneren Lauffläche des äußeren Lagen angeordneten Abstandhalter können hierzu Indexrillen gebildet sein.

Durch die Erfindung ist eine kompakte Anordnung möglich, die problemlos in das Gehäuse der meisten herkömmlichen Lageranordnungen, z. B. für Greiferwellen, integriert werden kann.

Die in der erfindungsgemäßen Vorrichtung eingesetzten Klemmkörper-Freilaufkupplungen sind kostengünstig und in vielen verschiedenen Ausgestaltungen erhältlich.

Durch die Ausnutzung der Bewegung des Maschinenelements ist keine zusätzliche Antriebsvorrichtung nötig.

Die Merkmale der vorliegenden Erfindung werden in der folgenden Beschreibung bevorzugter Ausführungsbeispiele im Zusammenhang mit den beigefügten, nachstehend aufgeführten Zeichnungen näher erläutert.

Es zeigen:
- Fig. 1A bis 1D: vier schematische, axiale Seitenansichten aufeinanderfolgender Lagerstellungen der erfindungsgemäßen Lageranordnung;
- Fig. 2: eine schematische, axiale Seitenansicht der Lageranordnung;
- Fig. 3: eine axiale Schnittansicht einer ersten Ausführungsform der Lageranordnung, bei der die Umgebungsstruktur gestrichelt dargestellt ist;
- Fig. 4: eine teilweise, perspektivische Schnittansicht der ersten Ausführungsform der Lageranordnung;
- Fig. 5: eine axiale Schnittansicht einer zweiten Ausführungsform der Lageranordnung;
- Fig. 6: eine teilweise, perspektivische Schnittansicht der zweiten Ausführungsform der Lageranordnung;
- Fig. 7A und 7B: teilweise, schematische, perspektivische Schnittansichten der Lageranordnung, die den Funktionszusammenhang der verschiedenen Teile in der Vorwärts- und Rückwärtsbewegung der Schwingbewegung darstellen.

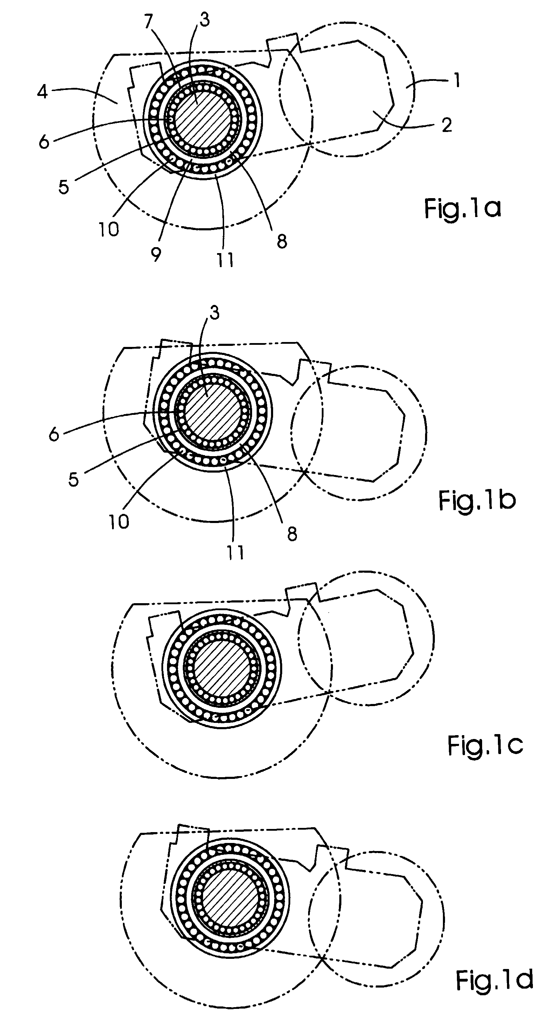

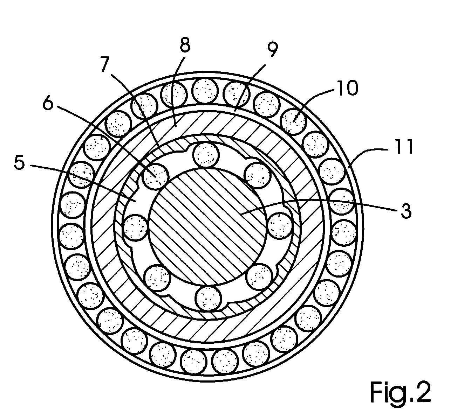

Fig. 1A und 2 zeigen eine schematische Darstellung einer Kurvenrolle 1, die sich an einem freien Ende eines Kurvenrollenarms 2 dreht. Der Kurvenrollenarm 2 ist an eine Welle 3 angelenkt. Die Welle 3 ist mittels der erfindungsgemäßen Lageranordnung drehbar in einem ortsfesten Gehäuse 4 gelagert.

Die Lageranordnung ist im wesentlichen ein doppeltes Wälzlager mit zwei koaxial angeordneten Lagern. In einer ersten Ausführungsform ist das innere Lager als eine Klemmrollen-Freilaufkupplung 5 oder ein Hochleistungs-Nadellager ausgebildet. Die Walzen (bzw. Nadeln) der Klemmrollen-Freilaufkupplung 5 laufen direkt auf der Welle 3, die auf diese Weise die innere Lauffläche der Klemmrollen-Freilaufkupplung 5 bildet. Auf die Welle 3 ist vorzugsweise eine Hochleistungshülse aufgezogen. Die Hülse, die fest mit der Achswelle 3 verbunden ist, definiert auf diese Weise die innere Lauffläche der Klemmrollen-Freilaufkupplung 5. Eine Vielzahl von Rollkörpern 6 laufen gleichmäßig verteilt auf der inneren Lauffläche sowie auf der durch eine äußere Hülse 7 definierten äußeren Lauffläche der Klemmrollen-Freilaufkupplung 5. Ein Abstandhalter 8 umgibt die Klemmrollen-Freilaufkupplung 5, d. h. die äußere Hülse 7 der Klemmrollen-Freilaufkupplung 5.

Der Abstandhalter 8 ist von einem äußeren Wälzlager umgeben, das eine die innere Lauffläche des äußeren Wälzlagers bildende innere Hülse 9 umfasst, die fest mit dem Abstandhalter 8 verbunden ist. Zwischen der inneren Lauffläche und einer die äußere Lauffläche des äußeren Wälzlagers bildenden äußeren Hülse 11 sind Walzen 10 verteilt. Die äußere Hülse 11 ist fest mit dem Gehäuse 4 verbunden und dadurch bezüglich des Gehäuserahmens ortsfest angeordnet.

Anhand der Fig. 1A bis 1D wird im folgenden die Funktionsweise der Lageranordnung näher beschrieben. In Fig. 1A ist eines der Rollkörper 6 und 10 der Klemmrollen-Freilaufkupplung 45 sowie das äußere Wälzlager zu Illustrationszwecken schwarz dargestellt.
(1) Während der Aufwärtsbewegung des Kurvenrollenarms 2 von einer Position knapp unterhalb der Horizontalen in eine Position knapp oberhalb der Horizontalen drehen sich alle Drehelemente mit Ausnahme der äußeren Hülse 11 des äußeren Wälzlagers im Gegenuhrzeigersinn. Die Klemmrollen-Freilaufkupplung 5, der Abstandhalter 8 und die innere Hülse 9 drehen sich mit dem Kurvenrollenarm 2 um vorzugsweise etwa 20°. Dies bedeutet, dass die Walzen 10 des äußeren Wälzlagers auf der äußeren Lauffläche in der Hülse 11 bewegt werden. Die Walzen 10 werden auf diese Weise um 20° im Gegenuhrzeigersinn bewegt, indem sie zwischen der inneren und der äußeren Lauffläche des äußeren Wälzlagers abrollen. Die einzelnen Elemente der Klemmrollen-Freilaufkupplung 5, insbesondere die Walzen 6 und die äußere Hülse 7 sowie der Abstandhalter 8 und die innere Hülse 9 bleiben bezüglich der Achse 3 und untereinander festgestellt.
(2) Während der Abwärtsbewegung des Kurvenrollenarms 2 dreht sich nur die Klemmrollen-Freilaufkupplung 5 im Uhrzeigersinn. Die Elemente des äußeren Wälzlagers, insbesondere die äußere Hülse 11, die Walzen 10 und die innere Hülse 9 sowie der Abstandhalter 8 und die äußere Hülse 7 der Klemmrollen-Freilaufkupplung 5 bleiben bezüglich des Gehäuses 4 festgestellt. Die Walzen 6 drehen sich im Gegenuhrzeigersinn und werden gleichzeitig im Uhrzeigersinn weiterbewegt, indem sie auf der Achse 3 abrollen.

Nach einem Zyklus aus einer Aufwärts- und einer Abwärtsbewegung sind die Walzen 6 und 10 relativ zueinander um eine Winkelindexeinheit verschoben. Diese Indexeinheit beträgt in dem in Fig. 1A bis 1D gezeigten Beispiel etwa 20°. Mit anderen Worten schwingt die 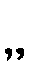 schwarze" Walze 6 der Klemmrollen-Freilaufkupplung zwischen ihren zwei Positionen knapp unterhalb und knapp oberhalb der Horizontalen, während die 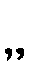 schwarze" Walze 10 bei jedem Zyklus im Gegenuhrzeigersinn um eine Indexeinheit bewegt wird. Nach jeweils 18 Zyklen sind demnach die Walzen 6 und 10 immer radial zueinander ausgerichtet.

Das Ergebnis in Bezug auf das Schmieren und die Lastenverteilung ist offensichtlich: Das äußere Wälzlager wird gesondert im Gegenuhrzeigersinn angetrieben, so dass das Schmiermittel gleichmäßig verteilt und jede der Walzen 10 um das Lager herum bewegt wird, wobei jede der Walzen 10 durchschnittlich derselben Belastung ausgesetzt ist. Die äußere Hülse 7 wird ebenfalls gesondert im Gegenuhrzeigersinn angetrieben, so dass das Schmiermittel auch in der Klemmrollen-Freilaufkupplung gleichmäßig verteilt wird.

Die Klemmrollen-Freilaufkupplungen sind in der Regel mit einem gezogenen Sperrprofil versehen. Sie sind in verschiedenen Richtungs-Ausführungen und mit unterschiedlichen Feststelleigenschaften erhältlich. Das heißt, die Kupplung kann im Uhrzeigersinn drehbar und im Gegenuhrzeigersinn festgestellt sein, bzw. umgekehrt. Sowohl die Welle als auch das Gehäuse können die Funktion des Drehmomentgebers übernehmen. Eine Veränderung des Feststelldrehmoments in Feststellrichtung kann vorzugsweise durch Verändern der Feststellrampen an der äußeren Lauffläche erfolgen. Die Feststellrampen sind in den Zeichnungen aus Gründen der Übersichtlichkeit nicht detailliert dargestellt.

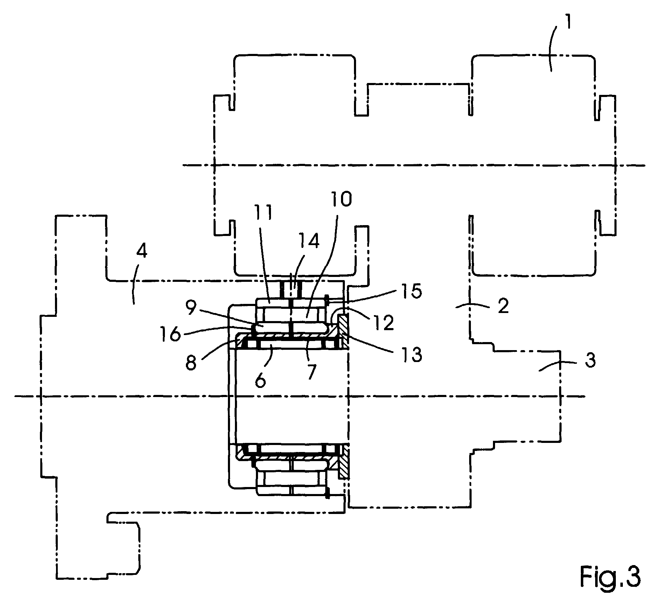

Wie in Fig. 3 gezeigt ist, ist der Kurvenrollenarm 2 zur Reduzierung der durch die Verschiebung der Kurvenrollen 1 auf das Lager übertragenen axialen Verdrehung auf der Welle 3 so nah wie möglich an der Lageranordnung angeordnet. Das Gehäuse 4 ist vorzugsweise fest mit dem Maschinenrahmen verbunden oder bewegbar auf einer sich drehenden Trommel oder einer umlaufenden Kette etc. angeordnet. Im Zusammenhang mit der vorliegenden Erfindung dient jedoch das Gehäuse 4 als Bezugselement für die Bewegung der einzelnen Elemente.

Hierbei sollte berücksichtigt werden, dass das Drehmoment auch in umgekehrter Richtung, d. h. ausgehend vom Gehäuse 4, übertragen werden kann, wobei in diesem Fall die Welle 3 das ortsfeste Element bildet. Ferner können auch die Klemmrollen-Freilaufkupplung und das Wälzlager in umgekehrter radialer Position angeordnet sein, d. h. die Klemmrollen-Freilaufkupplung kann außen angeordnet sein und das innere Wälzlager umgeben.

Die Rollen 6 der Klemmrollen-Freilaufkupplung 5, die vorzugsweise als eine Klemmrollen-Freilaufkupplung 5 mit kombiniertem Wälzlager ausgebildet ist, laufen unmittelbar in der Peripherie der Welle 3. Die äußere Hülse 7 weist ein gezogenes Sperrprofil auf, das die Rollen 6 radial nach außen sowie in axialer Richtung umgibt und so die äußere Lauffläche bildet. Der Abstandhalter 8 umschließt die Klemmrollen-Freilaufkupplung 5 peripher und axial in Richtung des Gehäuses. Das andere Ende des Abstandhalters 8 ist radial nach außen verlängert, so dass es eine Verschlussflansch 12 bildet. Die Verschlussflansch 12 stützt sich an einer Lagerdichtung 13 ab, die den Kurvenrollenarm 2 und die Welle 3 gegen die Lageranordnung abdichtet. Eine Schmiermittel-Einspritzöffnung 14 ermöglicht das Einspritzen von Schmiermittel in die Lageranordnung über das Gehäuse 4. Das äußere Wälzlager wird durch Halteringe 15 und 16 in seiner Position gehalten.

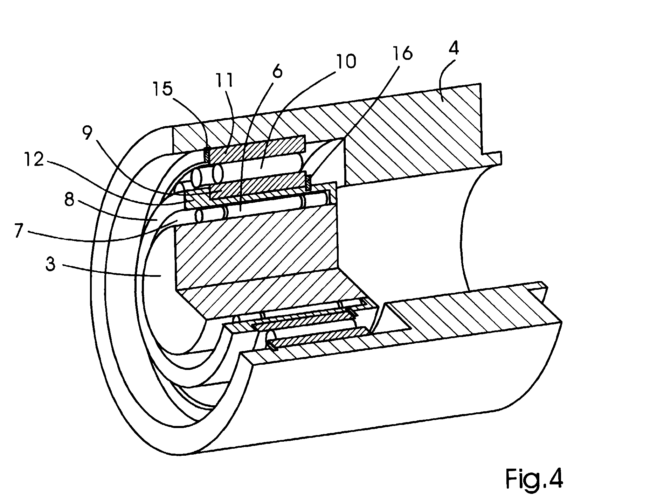

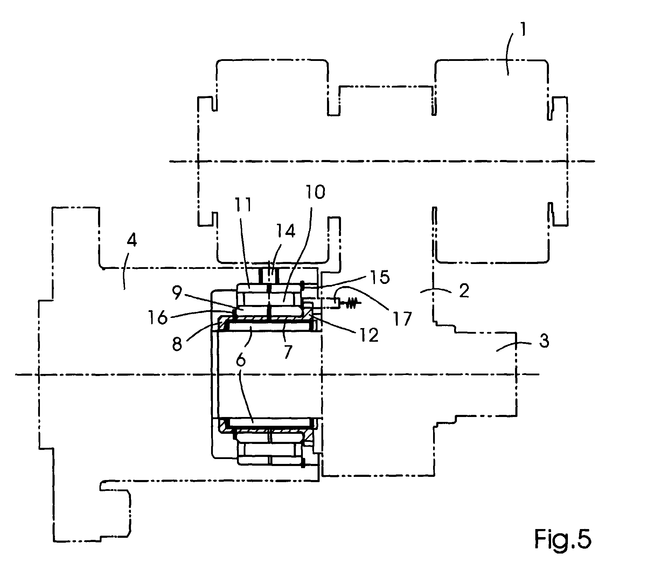

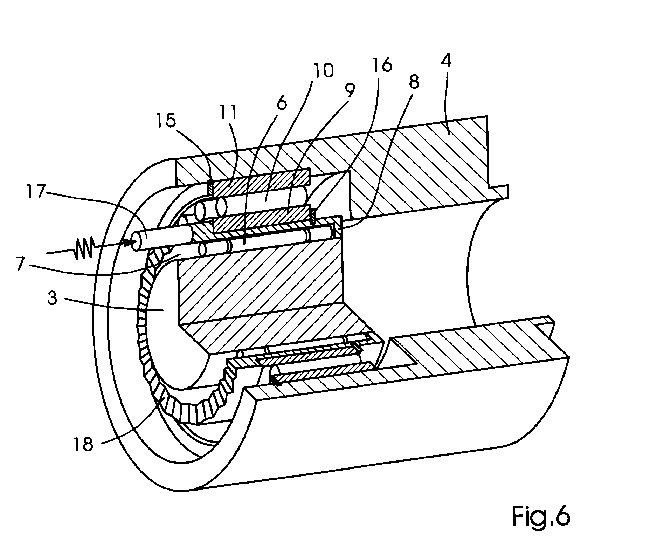

Anhand von Fig. 5 und der perspektivischen Darstellung in Fig. 6 wird im Folgenden eine zweite Ausführungsform der Erfindung beschrieben, in der die Klemmrollen-Freilaufkupplung durch ein Wälzlager oder vorzugsweise ein Hochleistungs-Nadellager ersetzt ist. Die Indexfunktion übernimmt nicht länger das innere Wälzlager, sondern ein federgespannter Indexstift 17. Der Abstandhalter 8 weist an seiner Stirnseite Indexrillen 18 auf. Die Indexstift 17 ist im Kurvenrollenarm 2 befestigt. Bei einer Aufwärtsbewegung des Kurvenrollenarms 2 rutscht der Indexstift 17 um mindestens eine Indexrille 18 vorwärts, während die Lagerdichtung 8 ortsfest bleibt. Wenn der Kurvenrollenarm 2 in der Rückwärtsbewegung zurück schwingt, hält eine der steilen Rampen der Indexrillen 18 den Indexstift 17 fest. Auf diese Weise wird der Abstandhalter 8 gezwungen, der Abwärtsbewegung des Kurvenrollenarms 2 zu folgen. Diese Indexfunktion hat dieselbe Wirkung wie die in Fig. 3 und 4 gezeigte Klemmrollen-Freilaufkupplung.

Die Indexrichtung des mit den Indexrillen 18 funktionell zusammenwirkenden Indexstifts 17 kann durch die Rampen bestimmt werden. In Vorwärtsrichtung flache Rampen und in der entgegengesetzten Richtung stark ansteigende Kanten bewirken, dass der Abstandhalter 8 mit der Abwärtsbewegung bewegt wird. Umgekehrt bewirken stark ansteigende Kanten in Vorwärtsrichtung und flache Rampen in Rückwärtsrichtung eine Indexbewegung mit der Aufwärtsbewegung. Die Höhe der Feststellkraft ist ferner über die Federkraft der den Stift 17 gegen die Rillen 18 vorspannenden Feder und über die Neigung der Rillen 18 einstellbar.

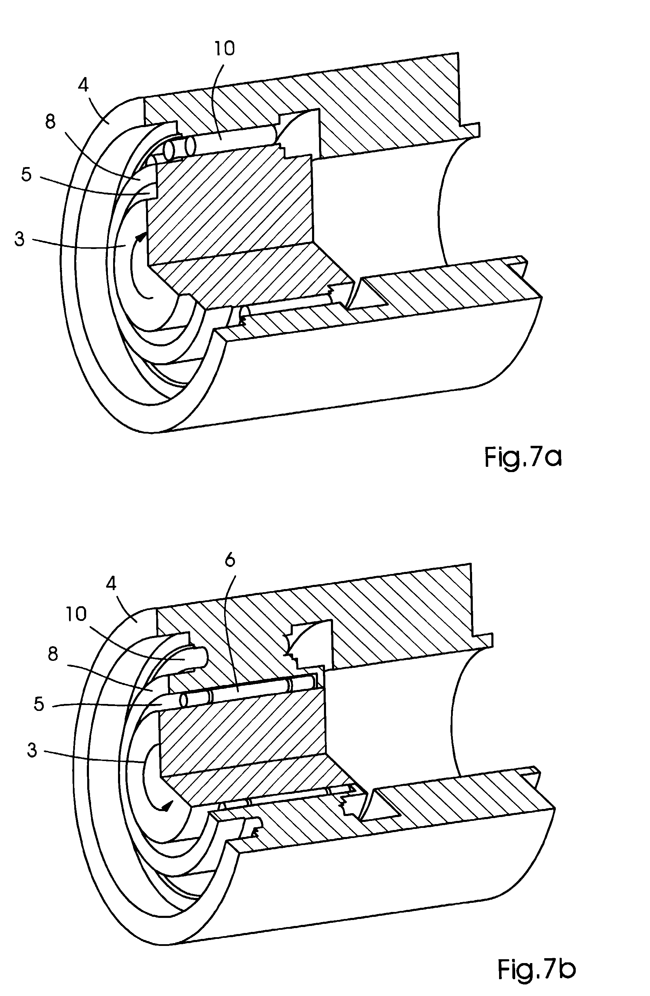

In Fig. 7A und 7B ist der funktionale Zusammenhang zwischen zwei Elementengruppen der Lageranordnung gezeigt. Bei einer in Fig. 7A gezeigten Drehung im Uhrzeigersinn wird die Klemmrollen-Freilaufkupplung 5 geschlossen und das über die Welle 3 übertragene Drehmoment auf den Abstandhalter 8 übertragen. Die innere Hülse des äußeren Wälzlagers dreht sich ebenfalls im Gegenuhrzeigersinn mit der Achswelle 3. Die Rollkörper des äußeren Wälzlagers laufen auf der Lauffläche im Innern der äußeren Hülse. In der in Fig. 7B gezeigten Drehung im Gegenuhrzeigersinn ist die Rollkupplung 5 geöffnet. Das ortsfeste Gehäuse 4, das äußere Wälzlager 10, der Abstandhalter 8 und die äußere Hülse der Klemmrollen-Freilaufkupplung 5 bleiben dabei festgestellt, während die Rollkörper 6 der Klemmrollen-Freilaufkupplung 5 auf der Welle 3 (d. h. auf der inneren Lauffläche der Klemmrollen-Freilaufkupplung 5) abrollen.

In Fig. 7A und 7B ist deutlich zu erkennen, dass das Drehmoment stattdessen auch über das Gehäuse 4 übertragen werden kann, während die Welle 3 bezüglich des Maschinenrahmens ortsfest ist. Die funktionalen Einheiten bleiben dabei unverändert. Dasselbe gilt für die zweite Ausführungsform der Erfindung mit dem Indexstift (Fig. 5, 6) und wenn die Klemmrollen-Freilaufkupplung das äußere Wälzlager bildet.

### Liste der Bezugszeichen

- 1: Kurvenrolle
- 2: Kurvenrollenarm
- 3: Welle
- 4: ortsfestes Gehäuse
- 5: Klemmrollen-Freilaufkupplung
- 6: Rollkörper
- 7: äußere Hülse
- 8: Abstandhalter
- 9: innere Hülse
- 10: Rollen
- 11: äußere Hülse
- 12: Verschlussflansch
- 13: Lagerdichtung
- 14: Schmiermittel-Einspritzöffnung
- 15: Haltering
- 16: Haltering
- 17: Indexstift
- 18: Indexrillen

## Patentansprüche

1. Vorrichtung zum Lagern eines Schwenkelements (2), insbesondere eines Kurvenabtaster-Arms in einer Rollenrotationsdruckmaschine, mit einem ortsfesten Element (4) und einer an diesem befestigten Lageranordnung, in der das Schwenkelement (2) relativ gegen das ortsfeste Element (4) derart schwenkbar gelagen ist, dass das Schwenkelement (2) in Vorwärtsrichtung in eine erste Endlage und in Rückwärtsrichtung in eine zweite Endlage bewegbar ist,
**dadurch gekennzeichnet,**
dass die Lageranordnung ein an dem Schwenkelement (2) befestigtes erstes Wälzlager und ein zwischen dem ersten Wälzlager und dem ortsfesten Element (4) angeordnetes zweites Wälzlager umfasst, von denen eines mit dem Schwenkelement (2) in Vorwärtsrichtung drehbar ist, während es in Rückwärtsrichtung an einer Drehung gehindert wird.

2. Vorrichtung nach Anspruch 1,
**dadurch gekennzeichnet,**
dass das ortsfeste Element (4) als ein ortsfestes Gehäuse und das Schwenkelement (2) als eine über die Lageranordnung an das Gehäuse (4) angelenkte schwenkbare Welle ausgebildet sind.

3. Vorrichtung nach einem der vorhergehenden Ansprüche,
**dadurch gekennzeichnet,**
dass ferner ein zwischen dem ersten Wälzlager und dem zweiten Wälzlager angeordneter Abstandhalter (8) vorgesehen ist.

4. Vorrichtung nach einem der vorhergehenden Ansprüche,
**dadurch gekennzeichnet,**
dass das erste Wälzlager als eine Klemmkörper-Freilaufkupplung (5) ausgebildet ist, die in Vorwärtsrichtung drehbar und in Rückwärtsrichtung an einer Drehung gehindert wird.

5. Vorrichtung nach einem der Ansprüche 1 bis 3,
**dadurch gekennzeichnet,**
dass an der Stirnseite des Abstandhalters (8) Indexrillen (18) vorgesehen sind und dass an dem Schwenkelement (2) ferner ein Indexstift (17) vorgesehen ist, der federkraftbeaufschlagt gegen die Indexrillen (18) der Stirnseite angestellt oder anstellbar ist.

6. Vorrichtung nach einem der vorhergehenden Ansprüche,
**dadurch gekennzeichnet,**
dass das erste Wälzlager mit der Achswelle (3) zwischen der ersten und zweiten Endlage schwenkbar ist oder geschwenkt wird, während das zweite Wälzlager nur in eine der beiden Richtungen schrittweise bewegbar ist oder bewegt wird.

7. Vorrichtung nach Anspruch 6,
**dadurch gekennzeichnet,**
dass das zweite Wälzlager bezüglich des ortsfesten Elements (4) nur in Vorwärtsrichtung schrittweise bewegbar ist oder bewegt wird.

8. Vorrichtung nach Anspruch 6,
**dadurch gekennzeichnet,**
dass das zweite Wälzlager bezüglich des ortsfesten Elements (4) nur in Rückwärtsrichtung schrittweise bewegbar ist oder bewegt wird.

9. Druckmaschine,
**gekennzeichnet durch**
eine Vorrichtung zum Lagern eines Schwenkelements (2) nach einem der vorhergehenden Ansprüche.
